# EUROPÄISCHE PATENTSCHRIFT

(11) **EP 1 093 962 B1**
(45) Veröffentlichungstag und Bekanntmachung des Hinweises auf die Patenterteilung: **21.04.2004**
(21) Anmeldenummer: 00112650.7
(22) Anmeldetag: 15.06.2000
(51) Int. Cl.: B60N 3/10

(54) **Halter für einen Getränkebehälter**
Holder for beverage containers
Support pour récipients pour boissons

(30) Priorität: 27.07.1999 DE 19935144
(43) Veröffentlichungstag der Anmeldung: 25.04.2001
(73) Patentinhaber: fischerwerke Artur Fischer GmbH & Co. KG, 72178 Waldachtal (DE); Land Rover Group Limited, Lighthorne, Warwick CV35 0RG (GB)
(72) Erfinder: Weiss, Martin, 53173 Bonn (DE); I.Ozozturk, Mehmet, Solihull B92 OQD (GB)

(56) Entgegenhaltungen:
- DE-A- 4 200 823
- DE-U- 29 810 872

## Beschreibung

Die Erfindung betrifft einen Halter für einen Getränkebehälter, mit den Merkmalen des Oberbegriffs des Anspruchs 1 der zum Einbau beispielsweise in eine Mittelkonsole eines Kraftwagens vorgesehen ist.

Aus der DE-A-42 00 823 ist ein derartiger Halter bekannt. Der bekannte Halter weist zwei Halteelemente auf, die um zwei voneinander beabstandete Schwenkachsen aus einer im Wesentlichen liegenden in eine im Wesentlichen nach oben stehende Stellung und umgekehrt schwenkbar sind. Die im Wesentlichen liegende Stellung der Halteelemente ist die Nichtgebrauchsstellung des Halters. In der im Wesentlichen stehenden Stellung weisen die beiden Halteelemente einen Abstand voneinander auf, der ein Einstellen eines Getränkebehälters zwischen die beiden Halteelemente ermöglicht. Die beiden Halteelemente stützen den zwischen sie gestellten Getränkebehälter seitlich in einer Höhe, die ein Umkippen des Getränkebehälters verhindert. Des Weiteren weist der bekannte Halter ein Koppelgetriebe mit einer Koppelstange auf, welches eine Schwenkbewegung eines Halteelements als gegenläufige Schwenkbewegung auf das andere Halteelement überträgt. Das Koppelgetriebe bewirkt, dass die beiden Halteelemente synchron in die im Wesentlichen stehende bzw. in umgekehrter Richtung in die im Wesentlichen liegende Stellung verschwenken.

Der Erfindung liegt die Aufgabe zugrunde, einen Halter der vorstehend erläuterten Art vorzuschlagen, der ein synchrones Schwenken der Halteelemente ohne Koppelstange erreicht.

Diese Aufgabe wird durch die Merkmale des Anspruchs 1 gelöst. Der erfindungsgemäße Halter weist ein Zahnstangengetriebe als Koppelgetriebe auf, welches eine Schwenkbewegung eines Halteelements als gegenläufige Schwenkbewegung auf das andere Haltelement überträgt. Die Erfindung ermöglicht eine einfache Ausbildung des Halters mit einem robusten und zuverlässigen Koppelgetriebe. Ein Vorteil eines Zahnstangengetriebes ist, dass sich die Zahnstange im Wesentlichen nur in ihrer Längsrichtung und nicht quer verschiebt, wodurch ihr Platzbedarf und die Gefahr einer Kollision mit anderen Gegenständen oder Elementen gering ist. Der erfindungsgemäße Halter lässt sich flachbauend ausbilden und bündig abschließend in einer Mittelkonsole eines Kraftwagens unterbringen. Des Weiteren ist der mechanische Aufbau einfach und ermöglicht trotzdem eine zuverlässige Abstützung eines eingestellten Getränkebehälters..

Vorteilhafter Weise werden die Halteelemente als Deckel ausgebildet, die in ihrer im Wesentlichen liegenden Stellung eine Öffnung des Halters verschließen.

Eine Ausgestaltung'der Erfindung sieht zumindest ein Öffnungsfederelement vor, welches beispielsweise an einem Halteelement angreift und dieses in eine neutrale, im Wesentlichen stehende Stellung schwenkt. Über das Koppelgetriebe schwenkt das Öffnungsfederelement auch das andere Halteelement in eine neutrale, im Wesentlichen stehende Stellung. Das Öffnungsfederelement kann auch an anderer Stelle, beispielsweise an einer Koppelstange oder einer Zahnstange des Koppelgetriebes angreifen. In der neutralen, im Wesentlichen stehenden Stellung ist das Öffnungsfederelement entspannt, weswegen auch die Bezeichnung neutrale Stellung des Halteelements gewählt worden ist. In dieser Stellung lässt sich ein Getränkebehälter kleinen Durchmessers zwischen die beiden Halteelemente einstellen. Beim Einstellen eines Getränkebehälters mit größerem Durchmesser werden die beiden Halteelemente gegen die Kraft des Öffnungsfederelements über die neutrale Stellung hinweg auseinander gedrückt. Diese Ausgestaltung der Erfindung ermöglicht eine einfache Anpassung des erfindungsgemäßen Halters an Getränkebehälter unterschiedlichen Durchmessers. Weiterer Vorteil ist, dass die Halteelemente, wenn sie vom eingestellten Getränkebehälter über die neutrale Stellung hinweg auseinander gedrückt werden, mit Vorspannung gegen den Getränkebehälter drücken und diesen infolgedessen mit einer Klemmkraft und dadurch sicher halten. In der im Wesentlichen liegenden Stellung werden die Halteelemente bei dieser Ausgestaltung der Erfindung von einer lösbaren Verriegelungseinrichtung gehalten. Derartige Verriegelungseinrichtungen, beispielsweise Push-Push-Mechaniken oder Herzkurvensteuerungen sind an sich bekannt.

Eine weitere, erfindungsgemäße Möglichkeit zur selbsttätigen Anpassung des Halters an Getränkebehälter unterschiedlichen Durchmessers ist es, eine federbeaufschlagte Andruckklappe an mindestens einem der beiden Halteelemente vorzusehen. Die Andruckklappe ist schwenkbar am Halteelement angebracht und wird von einem Federelement gegen eine Seite eines zwischen die beiden Halteelemente eingestellten Getränkebehälters gedrückt. Der Getränkebehälter wird dadurch ebenfalls klemmend zwischen den beiden Halteelementen gehalten. Damit die Andruckklappe bei Nichtgebrauch des erfindungsgemäßen Halters nicht störend im Weg ist, sieht diese Ausgestaltung der Erfindung ein Getriebe vor, welches die Andruckklappe beim Schwenken der Halteelemente in die im Wesentlichen liegende Stellung in Richtung des Halteelements schwenkt. Die Ausgestaltung der Erfindung mit der Andruckklappe ist unabhängig von der zuvor erläuterten Ausgestaltung, bei welcher die Halteelemente zur Anpassung an Getränkebehälter unterschiedlichen Durchmessers über eine neutrale Stellung hinweg gegen die Kraft eines Öffnungsfederelements auseinanderdrückbar sind, am erfindungsgemäßen Halter ausbildbar.

Bei einer Ausgestaltung der Erfindung ist als Antrieb für die Andruckklappe ein Kurvengetriebe vorgesehen. Dieses weist bei einer Ausgestaltung der Erfindung eine Steuerkurve auf, an der ein mit der Andruckklappe verbundenes Steuerelement beim Schwenken des Halteelements in die im Wesentlichen liegende Stellung entlanggleitet. Das Steuerelement kann beispielsweise ein seitlich von der Andruckklappe abstehender Steuerzapfen sein. Auch ist es möglich, dass die Andruckklappe selbst an der Steuerkurve entlanggleitet. Der Verlauf der Steuerkurve ist in Bezug auf die Schwenkachse des Halteelements so gewählt, dass die gewünschte Schwenkbewegung der Andruckklappe in Richtung des Halteelements beim Schwenken des Halteelements in die im Wesentlichen liegende Stellung erzielt wird.

Eine Ausgestaltung der Erfindung sieht ein Gehäuse vor, an welchem die beiden Halteelemente schwenkbar angebracht sind. Das Gehäuse weist eine Öffnung an einer Oberseite auf, die in der im Wesentlichen liegenden Stellung der Halteelemente, die bei dieser Ausgestaltung der Erfindung als Deckel ausgebildet sind, von den Halteelementen verschlossen wird. In der im Wesentlichen stehenden Stellung der Halteelemente steht ein zwischen die beiden Halteelemente eingestellter Getränkebehälter auf einem Boden oder dgl. des Gehäuses auf. Das Gehäuse bildet eine Auffangwanne für aus dem Getränkebehälter beispielsweise während des Fahrens herausschwappende Flüssigkeit.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Halters in einer Gebrauchsstellung;
- Figur 2: eine Stirndarstellung des Halters aus Figur 1;
- Figur 3: den Halter gemäß Figur 2 in einer Nichtgebrauchsstellung; und
- Figur 4: eine abgewandelte Ausführungsform des Halters aus Figur 1 in einer Figur 2 entsprechenden Darstellung gemäß der Erfindung.

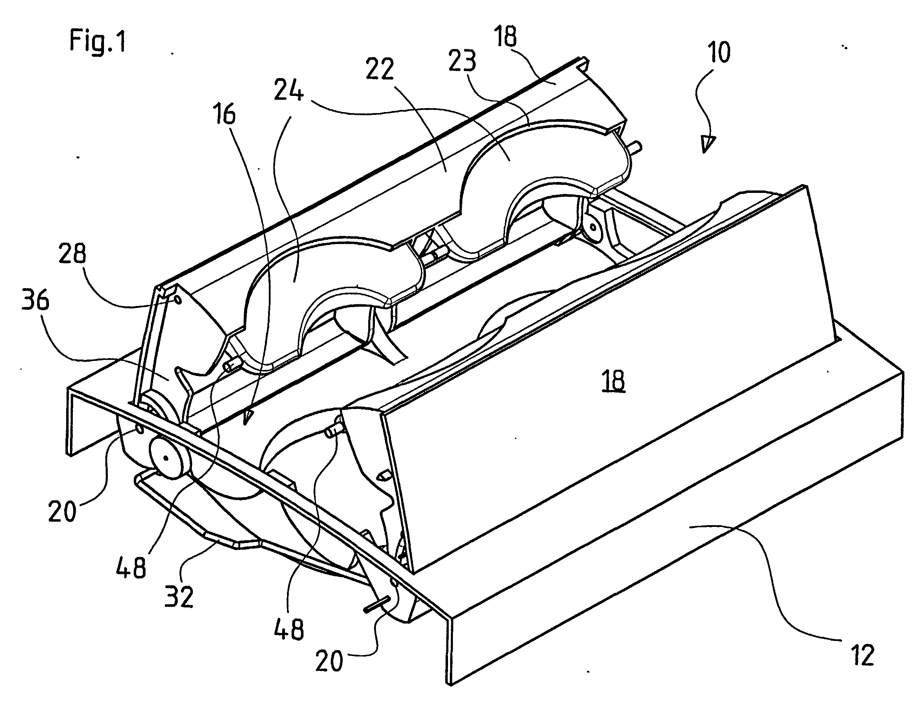

Der in Figur 1 dargestellte, insgesamt mit 10 bezeichnete, erfindungsgemäße Halter weist ein schachtelförmiges, flaches Gehäuse 12 mit einer gewölbten Oberseite auf. Das Gehäuse 12 bildet eine Auffangwanne. Es weist an seiner Oberseite eine rechteckige Öffnung 16 auf, die mit zwei Deckeln 18 verschließbar ist. Die Deckel 18 sind mit seitlich abstehenden Schwenkzapfen 20, die in Löcher in beiden Seiten des Gehäuses 12 eingreifen, schwenkbar mit dem Gehäuse 12 verbunden. Die Schwenkzapfen 20 definieren Schwenkachsen der Deckel 18. Die Schwenkachsen verlaufen parallel zu Längsrändern der Öffnung 16 und zu Längsrändem der Deckel 18, es ist je ein Deckel 18 an einem Längsrand der Öffnung 16 des Gehäuses 12 angebracht.

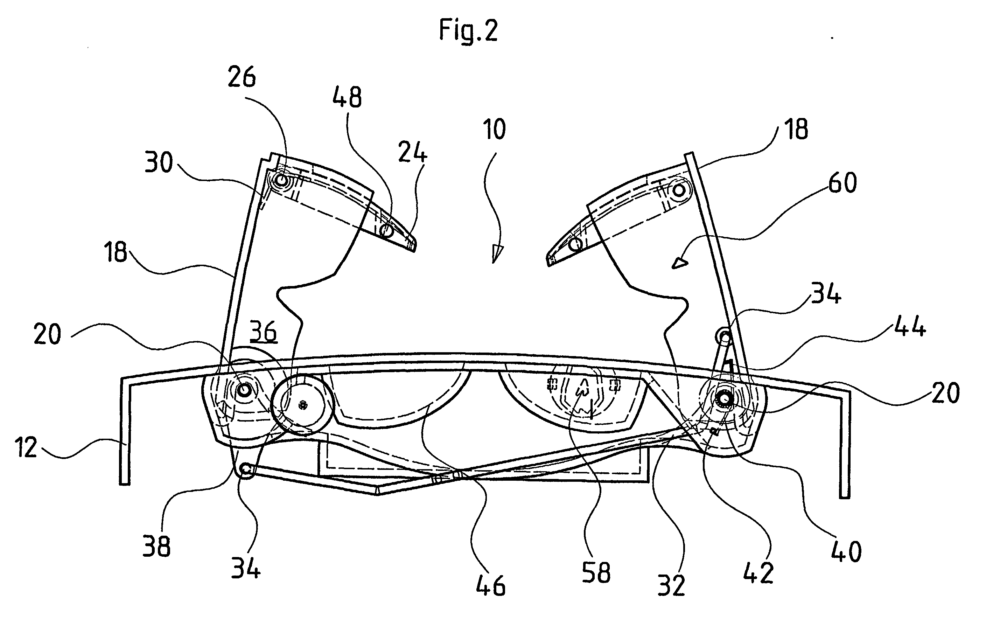

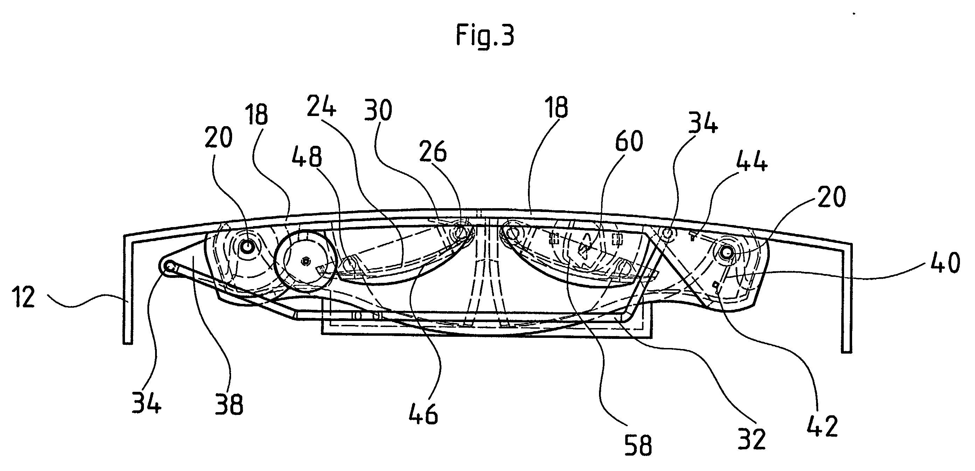

Die beiden Deckel 18 lassen sich aus einer im Wesentlichen liegenden Stellung, wie sie in Figur 3 dargestellt ist, in eine im Wesentlichen stehende Stellung, wie sie in Figuren 1 und 2 dargestellt ist, schwenken. In der im Wesentlichen liegenden Stellung verschließen die Deckel 18 die Öffnung 16 des Gehäuses 12. In der im Wesentlichen stehenden Stellung weisen die beiden Deckel 18 einen Abstand voneinander auf, der das Einstellen eines nicht dargestellten Getränkebehälters wie beispielsweise einer Getränkedose, eines Bechers oder einer Tasse ermöglicht. Die Deckel 18 bilden Halteelemente für im dargestellten Ausführungsbeispiel zwei derartige Getränkebehälter. Um einen zwischen die beiden Deckel 18 eingestellten Getränkebehälter zuverlässig zu halten, weist jeder Deckel 18 eine Längswand 22 auf, die in der Gebrauchsstellung in Richtung des jeweils anderen Deckels 18 absteht. Die Längswände 22 weisen jeweils zwei kreisbogenförmige Ausnehmungen 23 auf, die einem eingestellten Getränkebehälter Halt geben.

Zur Anpassung des erfindungsgemäßen Halters 10 an Getränkebehälter unterschiedlichen Durchmessers weist jeder der beiden Deckel 18 für jede der beiden Ausnehmungen 23 eine federbeaufschlagte, schwenkbare Andruckklappe 24 auf. Die Andruckklappen 24 weisen seitlich abstehende Schwenkzapfen 26 auf, die in Zapfenlöcher 28 der Deckel 18 eingreifen. Eine auf einen der Schwenkzapfen 26 aufgesetzte Torsionsschraubenfeder 30, die sich an einer Innen- oder Unterseite des Deckels 18 abstützt, drückt die Ausgleichsklappe 24 gegen eine Innen- oder Unterseite der Längswand 22 des Deckels 18. Wird ein Getränkebehälter zwischen die Deckel 18 eingestellt, werden die Ausgleichsklappen 24 gegen die Kraft der Torsionsschraubenfeder 30 nach unten und außen gedrückt und drücken ihrerseits von außen gegen den Getränkebehälter und halten diesen dadurch im Halter 10.

Die die beiden Halteelemente bildenden Deckel 18 weisen ein Koppelgetriebe auf, welches nachfolgend anhand Figur 2 erläutert wird. Figur 2 zeigt eine Stirnansicht des Halters 10, wobei eine dem Betrachter zugewandte Stimwand des Gehäuses 12 nicht dargestellt ist, damit das Koppelgetriebe sichtbar wird. Das Koppelgetriebe weist eine Koppelstange 32 auf, die in Augen 34 in Stirnwänden 36 der Deckel 18 eingehängt ist. Die Augen 34 bilden Schwenkgelenke 34 für die Koppelstange 32. Diese Schwenkgelenke 34 sind mit Abstand von den Schwenkzapfen 20 angeordnet, um die die Deckel 18 schwenkbar sind. Dabei sind die Schwenkgelenke 34 der Koppelstange 32 an den beiden Deckeln 18 auf gegenüberliegenden Seiten der Schwenkzapfen 20 der Deckel 18 angeordnet, die Koppelstange 32 greift in der im Wesentlichen stehenden Stellung der Deckel 18 an einem der Deckel 18 oberhalb und am anderen Deckel 18 unterhalb der Schwenkzapfen 20 an. Durch diese in Bezug auf die Schwenkzapfen 20 der Deckel 18 gegenüberliegende Anordnung der Schwenkgelenke 34 der Koppelstange 32 bewirkt die Koppelstange 32 eine gegenläufige Schwenkbewegung der beiden Deckel 18. Die beiden Deckel 18 bewegen sich durch die Koppelstange 32 zwangsweise synchron zueinander in die im Wesentlichen liegende oder umgekehrt in die im Wesentlichen stehende Stellung.

Um die Koppelstange 32 in der im Wesentlichen stehenden Stellung der Deckel 18 an einem, im dargestellten Ausführungsbeispiel am linken Deckel 18 unterhalb des Schwenkzapfens 20 anbringen zu können, weist dieser Deckel einen Fortsatz 38 auf, der den Deckel 18 über den Schwenkzapfen 20 hinaus verlängert und in welchem das Auge 34 angebracht ist, welches das Schwenkgelenk 34 für die Koppelstange 32 bildet.

Der Halter 10 weist ein Öffnungsfederelement in Form einer Torsionsschraubenfeder 40 auf. Ein Schenkel der Torsionsschraubenfeder 40 ist zwischen zwei Haltenocken 42 des Gehäuses 12 befestigt. Der andere Schenkel der Torsionsschraubenfeder 40 liegt an einer Innenseite des Deckels 18 an und wird von einem Haltenocken 44 in Anlage am Deckel 18 gehalten. Die Torsionsschraubenfeder 40 schwenkt den Deckel 18 aus der im Wesentlichen liegenden Stellung in die in Figuren 1 und 2 dargestellte, im Wesentlichen stehende Stellung. In der in Figuren 1 und 2 dargestellten Stellung ist die Torsionsschraubenfeder 40 entspannt, weswegen diese Stellung der Deckel 18 auch als neutrale Stellung bezeichnet wird. Über die Koppelstange 32 verschwenkt die Torsionsschraubenfeder 40 auch den anderen Deckel 18 in die dargestellte, neutrale, im Wesentlichen stehende Stellung. In dieser neutralen, im Wesentlichen stehenden Stellung verlaufen die beiden Deckel 18 nach oben schräg aufeinander zu. Beim Einstellen eines Getränkebehälters mit größerem Durchmesser werden die beiden Deckel 18 über die in Figuren 1 und 2 dargestellte neutrale Stellung hinweg gegen die Kraft der in der neutralen Stellung entspannten Torsionsschraubenfeder 40 auseinander gedrückt. Dabei drückt die Torsionsschraubenfeder 40 die beiden Deckel 18 zusammen in Richtung der neutralen Stellung und klemmt dadurch den eingestellten Getränkebehälter fest. Die Schwenkbarkeit der beiden Deckel 18 über die neutrale Stellung hinweg auseinander dient der Anpassung an Getränkebehälter unterschiedlichen Durchmessers. Diese Möglichkeit der Anpassung des erfindungsgemäßen Halters 10 an Getränkebehälter unterschiedlichen Durchmessers kann zusätzlich oder anstelle der Andruckklappen 24 vorgesehen sein, die ebenfalls der Anpassung des erfindungsgemäßen Halters 10 an Getränkebehälter unterschiedlichen Durchmessers dient.

In der geschlossenen, im Wesentlichen liegenden Stellung werden die beiden Deckel 18 gegen die Kraft der Torsionsschraubenfeder 40 von einer sog. Push-Push-Mechanik oder Herzkurven-Verriegelungseinrichtung 58, 60 gehalten. Durch kurzen Druck auf einen der Deckel 18 wird die Verriegelungseinrichtung 58 gelöst und die Deckel 18 schwenken federbetätigt in die im Wesentlichen stehende Stellung.

Der Halter 10 weist Getriebe für die Andruckklappen 24 auf, die die Andruckklappen 24 beim Schwenken der Deckel 18 in die im Wesentlichen liegende Stellung in Richtung zur Deckelinnenseite schwenken. Die Getriebe sind als Kurvengetriebe ausgebildet. Sie weisen eine ortsfeste Steuerkurve 46 auf, die an der Innenseite der Stirnwände des Gehäuses 12 angebracht ist. Die Andruckklappen 24 weisen seitlich abstehende Gleitzapfen 48 auf, die mit den Steuerkurven 46 zusammenwirken. Werden die Deckel 18 nach unten in die im Wesentlichen liegende Stellung geschwenkt, gelangen die Steuerzapfen 48 der Andruckklappen 24 in Anlage an die Steuerkurven 46, an denen Sie entlanggleiten. Dabei schwenken die Steuerzapfen 48 die Andruckklappen 24 gegen die Kraft der Torsionsschraubenfedem 30 in Richtung der Innenseite der Deckel 18. Dieses Schwenken der Andruckklappen 24 in Richtung der Innenseite der Deckel 18 beim Schwenken der Deckel 18 in die im Wesentlichen liegende Stellung ermöglicht eine niedrigere Bauhöhe des Gehäuses 12.

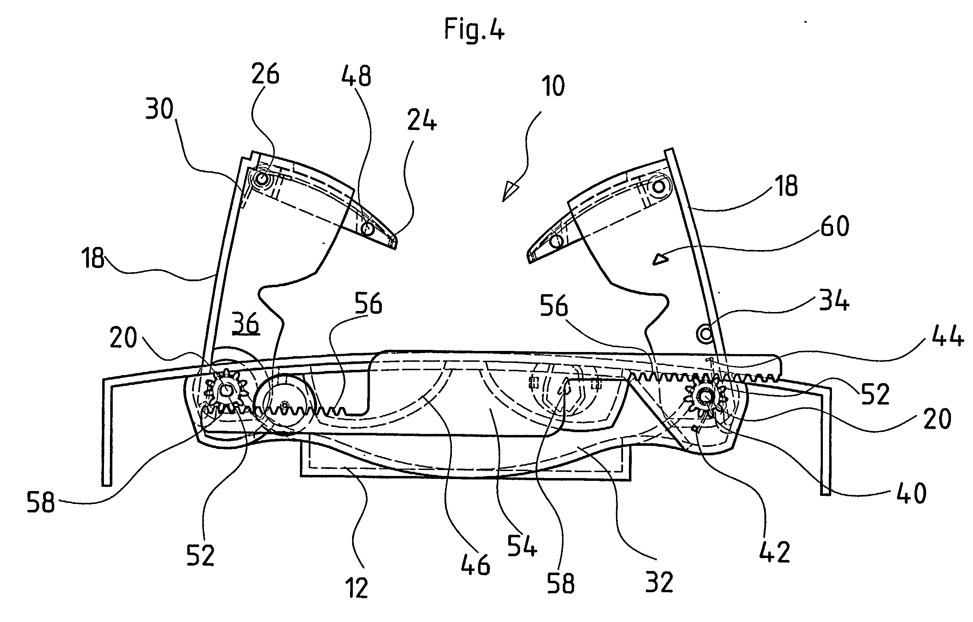

Figur 4 zeigt eine Abwandlung des Halters 10. Bei dem in Figur 4 dargestellten Halter 10 ist das Koppelgetriebe als Zahnstangengetriebe ausgebildet. Die Deckel 18 des Halters 10 aus Figur 4 weisen Zahnradsegmente 52 auf, die konzentrisch in einem Kreisbogen um die Schwenkzapfen 20 der Deckel 18 herum verlaufen. Dabei befindet sich das Zahnradsegment 52 eines Deckels 18 bei im Wesentlichen stehendem Deckel 18 oberhalb und das Zahnradsegment 52 des anderen Deckels 18 unterhalb der Schwenkzapfen 20. Eine Zahnstange 54 mit zwei einander entgegengesetzt orientierten, geradlinigen Verzahnungen 56 kämmt mit den Zahnradsegmenten 52 der beiden Deckel 18. Die Zahnstange 54 ist verschiebbar im Gehäuse 12 geführt. Durch Schwenken eines Deckels 18 wird die Zahnstange 24 verschoben und der andere Deckel 18 gegenläufig verschwenkt. Die Zahnstange 54 bewirkt also ebenso wie die Koppelstange 32 ein synchrones Schwenken der Deckel 18 in die im Wesentlichen liegende oder in die im Wesentlichen stehende Stellung. Im Übrigen ist der in Figur 4 dargestellte Halter 10 gleich aufgebaut wie der in Figuren 1 - 3 dargestellte Halter 10 und es wird zur Vermeidung von Wiederholungen auf die entsprechenden Ausführungen verwiesen.

## Patentansprüche

1. Halter für einen Getränkebehälter, mit zwei Halteelementen (18), die um zwei voneinander beabstandete Schwenkachsen aus einer im Wesentlichen liegenden in eine im Wesentlichen nach oben stehende Stellung und umgekehrt schwenkbar sind, wobei die beiden Halteelemente (18) in ihrer im Wesentlichen stehenden Stellung einen Abstand voneinander aufweisen, der das Einstellen eines Getränkebehälters zwischen die beiden Halteelemente (18) erlaubt, und mit einem Koppelgetriebe (32; 54), welches eine gegenläufige Schwenkbewegung der beiden Halteelemente (18) bewirkt, **dadurch gekennzeichnet, dass** das Koppelgetriebe (32) als Zahnstangengetriebe (52, 54) ausgebildet ist.

2. Halter nach Anspruch 1, **dadurch gekennzeichnet, dass** die Halteelemente (18) als Deckel (18) ausgebildet sind, die in ihrer im Wesentlichen liegenden Stellung eine Öffnung (16) des Halters (10) verschließen.

3. Halter nach Anspruch 1, **dadurch gekennzeichnet, dass** der Halter (10) ein Öffnungsfederelement (40) aufweist, welches die beiden Halteelemente (18) in eine neutrale, im Wesentlichen stehende Stellung nach oben schwenkt, dass die Halteelemente (18) gegen die Kraft des Öffnungsfederelements (40) über die neutrale Stellung hinaus auseinanderdrückbar sind, und dass der Halter (10) eine lösbare Verriegelungseinrichtung aufweist, die die Halteelemente (18) gegen die Kraft des Öffnungsfederelements (40) in der im Wesentlichen liegenden Stellung hält.

4. Halter nach Anspruch 1, **dadurch gekennzeichnet, dass** ein Halteelement (18) eine schwenkbare, federbeaufschlagte Andruckklappe (24) aufweist, die einen eingestellten Getränkebehälter in Richtung des anderen Halteelements (18) drückt, und dass der Halter (10) ein Getriebe (46, 48) aufweist, welches beim Schwenken der Halteelemente (18) in die im Wesentlichen liegende Stellung die Andruckklappe (24) in Richtung des Halteelements (18) schwenkt.

5. Halter nach Anspruch 4, **dadurch gekennzeichnet, dass** das Getriebe (46, 48) für die Andruckklappe (24) ein Kurvengetriebe aufweist.

6. Halter nach Anspruch 5, **dadurch gekennzeichnet, dass** das Kurvengetriebe eine ortsfeste Steuerkurve (46) aufweist, an welcher die Andruckklappe (24) selbst oder ein mit ihr verbundenes Steuerelement (48) beim Schwenken der Halteelemente (18) in die im Wesentlichen liegende Stellung entlanggleitet.

7. Halter nach Anspruch 2, **dadurch gekennzeichnet, dass** der Halter (10) ein Gehäuse (12) aufweist, an dem die beiden als Deckel ausgebildeten Halteelemente (18) schwenkbar angebracht sind, dass das Gehäuse (12) eine Öffnung (16) an einer Oberseite aufweist, die die Halteelemente (18) in ihrer im Wesentlichen liegenden Stellung verschließen, und dass das Gehäuse (12) als Auffangwanne für aus einem in den Halter (10) eingestellten Getränkebehälter austretende Flüssigkeit ausgebildet ist.

## Claims

1. Holder for a drinks container, comprising two holding elements (18) that are arranged to pivot about two pivot axes spaced apart from one another from a position in which they lie substantially flat to a position in which they are substantially upright and vice versa, the two holding elements (18) in their substantially upright position having a space between them that allows the insertion of a drinks container between the two holding elements (18), and comprising a coupling mechanism (32; 54) that effects a pivoting movement of the two holding elements (18) in opposite directions, **characterized in that** the coupling mechanism (32) is in the form of a rack-and-pinion mechanism (52, 54).

2. Holder according to claim 1, **characterized in that** the holding elements (18) are in the form of covers (18) that, in the position in which they lie substantially flat, close an opening (16) in the holder (10).

3. Holder according to claim 1, **characterized in that** the holder (10) has an opening spring element (40), that pivots the two holding elements (18) upwards to a neutral, substantially upright position, the holding elements (18) are arranged to be pressed apart out of the neutral position against the force of the opening spring element (40), and the holder (10) comprises a releasable locking device that holds the holding elements (18) against the force of the opening spring element (40) in the position in which they lie substantially flat.

4. Holder according to claim 1, **characterized in that** a holding element (18) comprises a pivotable, spring-actuated contact flap (24) that presses an inserted drinks container towards the other holding element (18), and the holder (10) comprises a mechanism (46, 48) that pivots the contact flap (24) towards the holding element (18) when the holding elements (18) are pivoted to the position in which they lie substantially flat.

5. Holder according to claim 4, **characterized in that** the mechanism (46, 48) for the contact flap (24) comprises a cam mechanism.

6. Holder according to claim 5, **characterized in that** the cam mechanism comprises a fixed-position control curve (46), along which the contact flap (24) itself or a control element (48) connected thereto slides when the holding elements (18) are pivoted to the position in which they lie substantially flat.

7. Holder according to claim 2, **characterized in that** the holder (10) comprises a housing (12), on which the two holding elements (18), in the form of covers, are mounted to pivot, the housing (12) has an opening (16) on its upper side, which opening is closed by the holding elements (18) when they are in the position in which they lie substantially flat, and the housing (12) is in the form of a collecting trough for liquid that spills out of a drinks container inserted in the holder (10).

## Revendications

1. Support pour un récipient pour boissons, avec deux organes d'arrêt (18) qui sont orientables vers le haut, autour de deux axes de pivotement écartés l'un de l'autre, d'une position essentiellement horizontale dans une position essentiellement verticale et inversement, sachant que les deux organes d'arrêt (18) sont séparés l'un de l'autre dans leur position essentiellement verticale par un intervalle qui permet le positionnement d'un récipient pour boissons entre les deux organes d'arrêt (18) et avec un engrenage couplé (32, 54), lequel provoque un mouvement pivotant contraire des deux organes d'arrêt (18), **caractérisé en ce que** l'engrenage couplé (32) est configuré comme un engrenage à crémaillère (52, 54).

2. Support selon la revendication 1, **caractérisé en ce que** les organes d'arrêt (18) sont configurés comme des couvercles (18) qui ferment une ouverture (16) du support (10) dans sa position essentiellement horizontale.

3. Support selon la revendication 1, **caractérisé en ce que** le support (10) comporte un organe d'ouverture à ressort (40), lequel fait pivoter vers le haut les deux organes d'arrêt (18) au-dessus d'une position neutre essentiellement verticale, **en ce que** les organes d'arrêt (18) sont compressibles séparément les uns des autres contre la force de l'organe d'ouverture à ressort (40) au-dessus de la position neutre et **en ce que** le support (10) comporte un dispositif de verrouillage amovible, qui maintient les organes d'arrêt (18) contre la force de l'organe d'ouverture à ressort (40) dans la position essentiellement horizontale.

4. Support selon la revendication 1, **caractérisé en ce qu'**un organe d'arrêt (18) comporte un volet presseur pivotant monté sur ressort (24) qui presse un récipient pour boissons positionné en direction de l'autre organe d'arrêt (18) et **en ce que** le support (10) comporte un engrenage (46, 48), lequel fait pivoter le volet presseur (24) lors du pivotement de l'organe d'arrêt (18) dans la position essentiellement horizontale, en direction de l'organe d'arrêt (18).

5. Support selon la revendication 4, **caractérisé en ce que** l'engrenage (46, 48) comporte une commande à came pour le volet presseur (24).

6. Support selon la revendication 5, **caractérisé en ce que** la commande à came comporte une came de commande fixe (46) le long de laquelle le volet presseur (24) lui-même ou un organe de commande associé à lui (48) glisse lors du pivotement des organes d'arrêt (18) dans la position essentiellement horizontale.

7. Support selon la revendication 2, **caractérisé en ce que** le support (10) comporte un boîtier (12) sur lequel sont placés de manière orientable les deux organes d'arrêt (18) configurés comme des couvercles, **en ce que** le boîtier (12) comporte une ouverture (16) sur un côté supérieur, que les organes d'arrêt (18) ferment dans sa position essentiellement horizontale et **en ce que** le boîtier (12) est configuré comme cuve de réception pour un liquide sortant d'un récipient pour boissons installé dans le support (10).
